Europäisches Patentamt

European Patent Office

Office européen des brevets

(19)

(11) Veröffentlichungsnummer: **0 161 641 B1**

# (12) EUROPÄISCHE PATENTSCHRIFT

(45) Veröffentlichungstag der Patentschrift:
20.04.88

(21) Anmeldenummer: 85105737.2

(22) Anmeldetag: 10.05.85

(51) Int. Cl.⁴: **B 01 D 13/02**, B 01 J 47/08, C 02 F 1/46, C 02 F 1/42

(54) Vorrichtung zur elektrodialytischen Wasserentsalzung.

(30) Priorität: 13.11.84 DE 3441419
16.05.84 DE 3418102

(43) Veröffentlichungstag der Anmeldung:
21.11.85 Patentblatt 85/47

(45) Bekanntmachung des Hinweises auf die Patenterteilung:
20.04.88 Patentblatt 88/16

(84) Benannte Vertragsstaaten:
AT CH FR GB IT LI

(56) Entgegenhaltungen:
DE - A - 2 755 729
US - A - 2 938 849
US - A - 3 006 828
US - A - 3 686 089

(73) Patentinhaber: Eumann, Hanns-Heinz, Lerchenweg 1,
D-7034 Gärtringen (DE)

(72) Erfinder: Eumann, Hanns-Heinz, Lerchenweg 1,
D-7034 Gärtringen (DE)
Erfinder: Blank, Winfried, 23 Lamary Avenue, Paradise,
S.A. 5075 (AU)

(74) Vertreter: Schiering, Hans, Dipl.-Ing., Westerwaldweg 4,
D-7030 Böblingen (DE)

ACTORUM AG

## Beschreibung

Die Erfindung bezieht sich auf eine Vorrichtung zur elektrodialytischen Wasserentsalzung, bei der in einem kreiszylindrischen Tank eine sich in der Tankachse erstreckende Zentralelektrode, ein die Zentralelektrode in Elektrolytlösung einbettender koaxialer Elektrodenraum, ein Ionenaustauschharz enthaltender koaxialer Harzraum und ein koaxialer Soleraum vorgesehen sind und die Trennung aneinandergrenzender Räume durch jeweils eine kationendurchlässige oder anionendurchlässige Membran erfolgt.

Eine derartige Vorrichtung verkörpert die Kombination von Ionenaustauschmaterial mit einer Dialyseeinrichtung und einer Elektrolyseeinrichtung. Hervorstechend ist an dieser Kombination das kontinuierliche Regenerieren des Ionenaustauschmaterials durch die treibende Kraft des elektrischen Feldes und die Scheidewirkung der jeweils angrenzenden Membran. Bei einem gewöhnlichen Ionenaustauscher dagegen schliessen sich an eine Beladephase eine Regenerierphase und eine Waschphase an, werden erhebliche Mengen an Regenerierchemikalien benötigt, treten beträchtliche Abwasserverluste auf, ist zumeist der Wechselbetrieb mit einer Zweitanlage geboten und sind umfangreiche Steuerungseinrichtungen erforderlich.

Aus der US-PS-3 686 089 ist eine Vorrichtung zur elektrodialytischen Wasserentsalzung bekannt, bei der in einem Gefäss durch jeweils eine kationendurchlässige oder anionendurchlässige Membran aufeinanderfolgende Räume für Kationenharz, Anionenharz, Sole, eine Anode und eine Kathode abgeteilt sind, sowohl der Anodenraum und der Kathodenraum als auch der Kationenharzraum und der Anionenharzraum durch den Soleraum und gegenseitige Distanz gehalten sind und der Kationenharzraum und der Anionenharzraum durch eine Verbindungsleitung für das teilentsalzte Wasser hintereinandergeschaltet sind. Hierbei sind sämtliche Membranen eben, von gleichem rechteckigem Zuschnitt und parallel zueinander angeordnet. Dasselbe gilt auch für die durch die Membranen abgeteilten Räume für Kationenharz, Anionenharz, Sole, eine Anode oder eine Kathode. Es erscheint als nachteilig, dass für die Vorrichtung viel Stellfläche benötigt wird, die Wartung eines Raumes häufig die Demontage der gesamten Vorrichtung erfordert, die Abdichtung auf einen höheren Betriebsdruck Schwierigkeiten bereitet, keine gleichmässige Verteilung der von oben einlaufenden zu behandelnden Flüssigkeit möglich ist, die Ableitung der sich bildenden Gase zu ungleichmässig erfolgt, zu Ionendurchbrüchen tendierende zunehmende Unregelmässigkeiten im Zustandsprofil eines Ionenaustauschbetts nicht auf einfache Weise zu korrigieren sind und den Durchflusswiderstand des Ionenaustauschbetts erhöhende Ablagerungen sich allenfalls mit hohem Aufwand entfernen lassen.

Der Erfindung liegt die Aufgabe zugrunde, eine Vorrichtung zur elektrodialytischen Wasserentsalzung zu schaffen, die bei niedrigen Fertigungskosten und niedrigen Betriebskosten vielseitig verwendbar ist, in der Behandlung wässriger Flüssigkeiten eine hohe Leistung erbringt, bequem zu transportieren ist, mit einer kleinen Stellfläche auskommt, wenig störungsanfällig ist und eine einfache Wartung ermöglicht.

Diese Aufgabe wird erfindungsgemäss dergestalt gelöst, dass der Soleraum zwischen dem die Zentralelektrode enthaltenden Elektrodenraum und dem Harzraum angeordnet ist und zwischen dem Harzraum und der Tankwand ein hohlzylindrisch ausgebildeter und zur Aufnahme einer anderen Elektrolytlösung eingerichteter weiterer Elektrodenraum eingefügt ist.

Eine solche Bauform der Vorrichtung zur elektrodialytischen Wasserentsalzung macht es möglich, dass zwei durch ein Überleitungsrohr aneinandergereihte Tanks an ihren Zentralelektroden durch eine Stromschiene verbunden sind und sich im äusseren Elektrodenraum des als Kationenaustauscher eingerichteten einen Tanks die Anode und im äusseren Elektrodenraum des als Anionenaustauscher eingerichteten anderen Tanks die Kathode befindet. Damit haben die vom einen Tank zum anderen Tank führenden elektrischen Feldlinien in der Sole nur noch äusserst kurze Entfernungen zu überbrücken, was sich in einer die Betriebskosten der Vorrichtung mindernden Absenkung des elektrischen Widerstandes niederschlägt. Zudem lässt sich durch eine für beide Tanks gemeinsame Soleumwälzung eher eine grössere Homogenität in der Solekonzentration erzielen, die einem höheren Wirkungsgrad der Vorrichtung ebenfalls förderlich ist. Der Wechsel von einem Gefäss mit zueinander parallelen Räumen zu einem Tank mit zueinander koaxialen Räumen erleichtert die Abdichtung auf einen höheren Betriebsdruck, die gleichmässige Verteilung der zu behandelnden Flüssigkeit über die Querschnittsfläche des jeweiligen Ionenaustauschbetts und den Abzug der sich in den Elektrodenräumen bildenden Gase. In dem kreiszylindrischen Tank lässt sich die Unterbringung vergleichsweise grosser Mengen an Ionenaustauschharz vorsehen, was zu einer höheren Speicherkapazität des Ionenaustauschbetts und zu einem grösseren Spielraum in der Salzbelastung führt. Damit kann auch eher einmal durch Abschaltung oder Ausfall des elektrischen Feldes vorübergehend im gewöhnlichen Ionenaustauschbetrieb gearbeitet werden oder das Regenerieren des Ionenaustauschbetts auf Billigstromzeiten beschränkt werden. Ferner lässt sich in dem kreiszylindrischen Tank eine funktionstüchtige Rückspülmöglichkeit zur Beseitigung durchflusshemmender Ablagerungen und zur Homogenisierung des Ionenaustauschbetts vorsehen. Die mit der Erfindung erzielten Vorteile bestehen aber insbesondere auch darin, dass der Tank im Rahmen einer Vorrichtung zur elektrodialytischen Wasserentsalzung sowohl für die Doppeltankkonfiguration einer Kationenaustauscher-Anionenaustauscher-Kombination als auch einzeln als einfacher Kationenaustauscher oder einfacher Anionenaustauscher verwendet werden kann und sich dementsprechend leichter eine kostensparende Serienfertigung verwirklichen lässt.

Ein aufgrund der in den Unteransprüchen angegebenen Erfindungsausgestaltungen besonders bevorzugtes Ausführungsbeispiel der Erfindung ist in der teilweise schematischen Zeichnung dargestellt und wird im folgenden näher beschrieben.

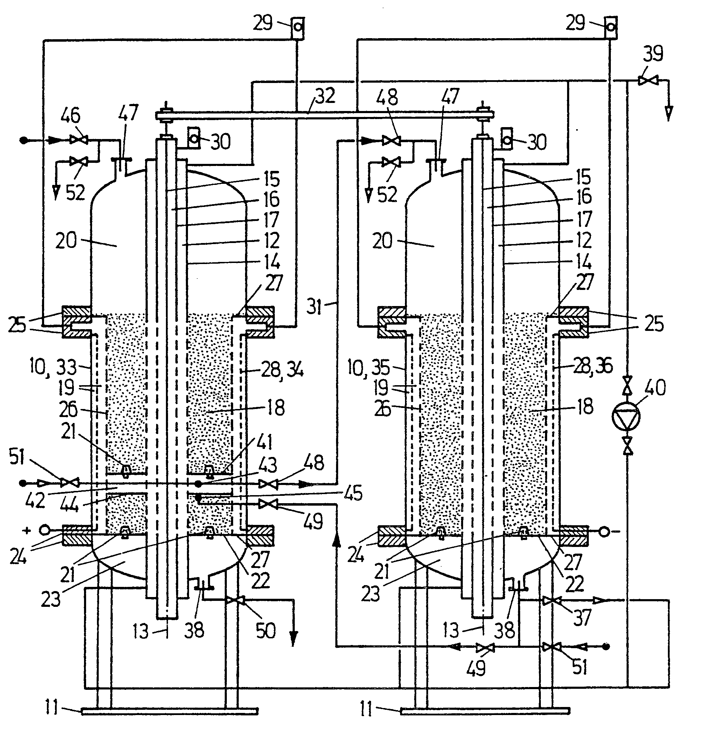

Die Zeichnung zeigt zwei baulich gleiche Tanks 10, wenn man von einem später erläuterten zusätzlichen Einbau in dem einen Tank 10 und von unterschiedlichen Bestückungsmaterialien einmal absieht. Jeder Tank 10 erhält durch ein angeschweisstes Fussgestell 11 eine aufrechte Stellung. Dadurch, dass der Soleraum 12 die beiden Enden des kreiszylindrischen Tanks 10 in einem in Richtung der Tankachse 13 aus dem Tank 10 herausnehmbaren und im Membranaufnahmebereich perforierten Rohr 14 überragt, wird die Herstellung des Tanks 10 vereinfacht und die Wartung der Vorrichtung erleichtert. Nachdem der die Zentralelektrode 15 enthaltende Elektrodenraum 16 die beiden Enden des Soleraums 12 in einem in Richtung der Tankachse 13 aus dem Tank 10 herausnehmbaren und im Membranauflagebereich perforierten Ionenrohr 17 überragt, wird die Herstellung des Tanks 10 noch weiter vereinfacht und die Wartung der Vorrichtung noch weiter erleichtert. Zudem lassen sich dicht vor den Enden des Rohres 14 und des Ionenrohres 17 besonders behinderungsfrei radial abgehende Auslässe anbringen. Der Soleraum 12 erhält eine über seine volle Länge gleichbleibende Querschnittsfläche und gerät besonders langgestreckt, was die Soleumwälzung weiter verbessert. Trotz der geringen Querschnittsfläche des Soleraums 12 werden aber eine grosse Membranfläche gegenüber dem sich nach aussen anschliessenden Harzraum 18 und letztlich auch eine grosse Membranfläche gegenüber dem sich nach innen anschliessenden Elektrodenraum 16 erzielt, was für die Schaffung niedriger elektrischer Membranwiderstände wichtig ist. Vorzugsweise befindet sich an den Übergangsstellen zwischen der Tankwand und dem Rohr 14 je ein Dichtgewinde und an den Übergangsstellen zwischen dem Rohr 14 und dem Innenrohr 17 je eine O-Ring-Dichtung.

Die in der Zeichnung wiedergegebene Vorrichtung zur elektrodialytischen Wasserentsalzung weist nicht zuletzt die Besonderheit auf, dass sich in dem Tank 10 über dem äusseren Elektrodenraum 19 und dem Harzraum 18 ein gegenüber dem äusseren Elektrodenraum 19 verschlossener Rückspülraum 20 zum Rückspülen von im Harzraum 18 befindlichem Ionenaustauschharz anschliesst. Damit lässt sich durch Rückspülen von unten nach oben das im Harzraum 18 befindliche Ionenaustauschbett rasch und einfach rehomogenisieren und von durchflusshemmenden Ablagerungen befreien. Hierbei genügt eine Volumenvergrösserung um etwa 60 bis 80 Prozent. Da der Rückspülraum 20 in radialer Richtung bis an die Tankwand heranreicht, kommt man für den Rückspülbetrieb mit einer geringfügigen Verlängerung des Tanks 10 nach oben aus.

In dem Tank 10 schliesst sich unter dem äusseren Elektrodenraum 19 und dem Harzraum 18 durch einen im Bereich des Harzraumes 18 mit harzundurchlässigen Düsen 21 versehenen ringförmigen Zwischenboden 22 getrennt ein Wassersammelraum 23 an. Die vorzugsweise als Schlitzkappendüsen ausgebildeten Düsen 21 gestatten den Durchtritt von Flüssigkeiten in beiden Richtungen und halten zugleich die jeweiligen Harzpartikel im Harzraum 18 zurück. Dadurch, dass der Tank 10 zum Öffnen mit einem unteren Flanschpaar 24 in Höhe des unteren Endes des äusseren Elektrodenraums 19 und mit einem oberen Flanschpaar 25 in Höhe des oberen Endes des äusseren Elektrodenraums 19 versehen ist, werden wiederum die Herstellung des Tanks 10 vereinfacht und die Wartung der Vorrichtung erleichtert.

Der äussere Elektrodenraum 19 endet an seiner inneren Mantelfläche mit einem als Membranauflage durchgehend perforierten Aussenrohr 26, welches beiderseits über ein Dichtgewinde mit einem Haltering 27 verbunden ist. Der eine Haltering 27 steht in Höhe des unteren Flansches des oberen Flanschpaares 25 und der andere Haltering 27 in Höhe des oberen Flansches des unteren Flanschpaares 24 von der Tankwand nach innen ab. In ähnlicher Weise wird auch die als kreiszylindrisches Gitter ausgebildete Elektrode 28 des äusseren Elektrodenraums 19 gehalten. Durch den oberen Flansch des unteren Flanschpaares 24 hindurch erhält die Elektrode 28 ihren elektrischen Anschluss und durch den verbreiterten und mit einer inneren Ringnut versehenen unteren Flansch des oberen Flanschpaares 25 hindurch erhält der äussere Elektrodenraum 19 eine Verbindung zu einem als Gasauslass und Nachfüllstelle dienenden Schwimmerbehälter 29. Ein weiterer Schwimmerbehälter 30 ist am oberen Ende des die Zentralelektrode 15 enthaltenden Elektrodenraums 16 angeschlossen.

Das Anbringen der kationendurchlässigen oder anionendurchlässigen Membran erfolgt beim durchgehend perforierten Aussenrohr 26 und beim im Membranauflagebereich perforierten Innenrohr 17 jeweils innen und beim im Membranauflagebereich perforierten Rohr 14 aussen. An dieser Stelle sei zur Begriffserläuterung festgehalten, dass mit der Durchlässigkeit einer Membran für Ionen der einen Polarität die Undurchlässigkeit der Membran für Ionen der anderen Polarität und für ladungsneutrale Moleküle verbunden ist. Vorzugsweise werden riemenartige Membranbefestiger verwendet, die lediglich die Stirnenden der schlauchartigen Membranen rundum festlegen. Zum Auswechseln einer einzelnen Membran braucht nicht die ganze Vorrichtung auseinandergenommen zu werden. Vielmehr kommt man dazu mit einer geringfügigen und auch sonst wartungsfreundlichen Teildemontage aus.

Insgesamt zeigt die Zeichnung eine Vorrichtung zur elektrodialytischen Wasserentsalzung dergestalt, dass zwei durch ein Überleitungsrohr 31 aneinandergereihte Tanks 10 an ihren Zentralelektroden 15 durch eine Stromschiene 32 verbunden sind und sich im äusseren Elektrodenraum 19 des als Kationenaustauscher 33 eingerichteten einen Tanks 10 die Anode 34 und am äusseren Elektrodenraum 19 des als Anionenaustauscher 35 eingerichteten anderen Tanks 10 die Kathode 36 befindet. In diesem Fall besteht die Anode 34 aus Titanstahl mit Platinüberzug, die die Anode 34 umgebende Elektrolytlösung aus verdünnter Schwefelsäure, die Kathode 36 aus V4A-Stahl, die die Kathode 36 umgebende Elektrolytlösung aus verdünnter Natronlauge und die Elektrolytlösung in den beiden je eine Zentralelektrode 15 enthaltenden Elektrodenräumen 16 aus Natriumsulfatlösung. Die Harzfüllung ist beim Kationenaustauscher 33 Kationenharz und beim Anionenaustauscher 35 Anionenharz. Von aussen nach innen folgen beim Kationenaustauscher 33 zwei kationendurchlässige Membranen und eine anionendurchlässige Membran aufeinander und beim Anionenaustauscher 35 zwei anionendurchlässige Membranen und eine kationendurchlässige Membran.

Im elektrodialytischen Betrieb der Vorrichtung werden aus der in beiden Tanks 10 von oben nach unten strömenden wässrigen Flüssigkeit unter der treibenden Kraft des elektrischen Feldes zunächst Kationen, beispielsweise Natriumionen, in den Soleraum 12 des Kationenaustauschers 33 abgedrängt, während Wasserstoffionen aus dem äusseren Elektrodenraum 19 des Kationenaustauschers 33 nachwandern, und danach Anionen, beispielsweise Chlorionen, in den Soleraum 12 des Anionenaustauschers 35 abgedrängt, während Hydroxylionen aus dem äusseren Elektrodenraum 19 des Anionenaustauschers 35 nachwandern. Aufgrund der dort wesentlich höheren Ionenkonzentration erfolgen die Ionentransporte jedoch überwiegend über die Ionenaustauschharze, womit eine starke Reduzierung der elektrischen Widerstände verbunden ist und sich die engen Membranabstände einer gewöhnlichen Elektrodialyse mit einer entsprechend bescheidenen Durchflussleistung vermeiden lassen. Die Reduzierung des elektrischen Widerstandes durch die Zwischenfügung von Ionenaustauschharz wirkt sich insbesondere bei einem geringen Salzgehalt der zu behandelnden wässrigen Flüssigkeit bzw. bei einer niedrigen Ionenkonzentration dieser Flüssigkeit im Endbereich der Wasserentsalzung aus. In diesem Zusammenhang ist anzumerken, dass die Scheidewirkung der Membranen auf der Einlagerung von Ionenaustauschsubstanzen in einem Gerüstmaterial beruht. Die sich in den beiden Soleräumen 12 beim elektrodialytischen Betrieb der Vorrichtung anreichernde Salzsole wird von Zeit zu Zeit unter Nachführung von abgezweigtem Reinwasser teilweise abgelassen und damit rückverdünnt. Das Rückverdünnungsventil 37 befindet sich am unteren Leitungsanschluss 38 des Anionenaustauschers 35 und das Soleablassventil 39 an der oberen Zusammenführung der beiden Soleräume 12 und noch vor der für beide Soleräume 12 gemeinsamen Umwälzpumpe 40.

Eine weitere Ausgestaltung der Vorrichtung zur elektrodialytischen Wasserentsalzung besteht darin, dass ein anteilsmässig kleiner unterer Abschnitt des Harzraumes 18 des als Kationenaustauscher 33 eingerichteten einen Tanks 10 durch eine an ihrer Zwischenkammerdecke 41 mit harzundurchlässigen Düsen 21 versehene ringförmige Zwischenkammer 42 als Sicherheitsfilter abgeteilt ist und ein aus dem Tank 10 herausführender Zwischenkammerauslass 43 und ein dicht unter dem Zwischenkammerboden 44 zurückführender Sicherheitsfiltereinlass 45 durch den als Anionenaustauscher 35 eingerichteten anderen Tank 10 überbrückt sind. Auf diese Weise spart man für den Sicherheitsfilter einen kleineren zusätzlichen Tank ein und benutzt insbesondere den Soleraum 12, die Zentralelektrode 15, die im äusseren Elektrodenraum 19 befindliche Elektrode 28, die die Elektrode 28 umgebende eine Elektrolytlösung und die die Zentralelektrode 15 umgebende andere Elektrolytlösung für zwei elektrodialytische Filter gemeinsam.

Bei einem vorübergehenden Ausfall oder einer zeitweiligen Abschaltung des elektrischen Stromes kann die Wasserentsalzung ohne Unterbrechung im gewöhnlichen Filterbettverfahren fortgesetzt werden, da die im Harzraum 18 untergebrachte Menge an Ionenaustauschharz dazu eine genügend grosse Beladekapazität hat. Ohne die permanente Regeneration des Ionenaustauschharzes durch die Kraft des elektrischen Feldes ändert sich allerdings im von der jeweiligen wässrigen Flüssigkeit von oben nach unten durchströmten Harzraum 18 das Ionenprofil. Wird der elektrische Strom wieder eingeschaltet, so dauert es eine Weile, bis sich quer zur Strömungsrichtung der zu behandelnden Flüssigkeit entlang der Feldlinien des elektrischen Feldes die alten Gleichgewichte in der Konzentration der sich gegenseitig verdrängenden Ionen eingestellt haben.

Durch die an der Vorrichtung vorgesehene Rückspülmöglichkeit können durchflusshemmende und damit leistungsmindernde Ablagerungen zwischen den Harzpartikeln von Zeit zu Zeit auf einfache Weise wieder beseitigt werden. Dies ist von besonderer Bedeutung, wenn die Behandlung trüber wässriger Flüssigkeiten wie junger Wein oder Fruchtsaft, ansteht. Nachdem sich in Richtung des elektrischen Feldes allmählich fingerförmige Unregelmässigkeiten in der Ionenverteilung auszubilden pflegen, findet mit dem Rückspülen zugleich eine äusserst vorteilhafte Rehomogenisierung der beiden Ionenaustauschbetten statt. Dazu werden das Rohwasserventil 46 am oberen Leitungsanschluss 47 des Kationenaustauschers 33, die Überleitungsventile 48, die Rückleitungsventile 49 und das Reinwasserventil 50 geschlossen und die zwei Spülwasserventile 51 am unteren Leitungsanschluss 38 des Anionenaustauschers 35 und an der ringförmigen Zwischenkammer 42 und die zwei Abwasserventile 52 an den beiden oberen Leitungsanschlüssen 47 der beiden Tanks 10 geöffnet. Der Spülwasserdruck lässt sich so bemessen, dass der Pegel des Ionenaustauschharzes nur bis knapp unter den vom Tank 10 achsparallel abstehenden oberen Leitungsanschluss 47 ansteigt und ein Rückhaltesieb entbehrlich ist.

## Patentansprüche

1. Vorrichtung zur elektrodialytischen Wasserentsalzung, bei der in einem kreiszylindrischen Tank (10) eine sich in der Tankachse erstreckende Zentralelektrode (15), ein die Zentralelektrode in Elektrolytlösung einbettender koaxialer Elektrodenraum (16), ein Ionenaustauschharz enthaltender koaxialer Harzraum (18) und ein koaxialer Soleraum (12) vorgesehen sind und die Trennung aneinandergrenzender Räume durch jeweils eine kationendurchlässige oder anionendurchlässige Membran erfolgt, dadurch gekennzeichnet, dass der Soleraum (12) zwischen dem die Zentralelektrode (15) enthaltenden Elektrodenraum (16) und dem Harzraum (18) angeordnet ist und zwischen dem Harzraum (18) und der Tankwand ein hohlzylindrisch ausgebildeter und zur Aufnahme einer anderen Elektrolytlösung eingerichteter weiterer Elektrodenraum (19) eingefügt ist.

2. Vorrichtung nach Anspruch 1, dadurch gekennzeichnet, dass der Soleraum (12) die beiden Enden des kreiszylindrischen Tanks (10) in einem in Richtung der Tankachse (13) aus dem Tank (10) herausnehmbaren und im Membranaufnahmebereich perforierten Rohr (14) überragt.

3. Vorrichtung nach Anspruch 2, dadurch gekennzeichnet, dass der die Zentralelektrode (15) enthaltende Elektrodenraum (16) die beiden Enden des Soleraums (12) in einem in Richtung der Tankachse (13) aus dem Tank (10) herausnehmbaren und im Membranauflagebereich perforierten Innenrohr (17) überragt.

4. Vorrichtung nach einem der Ansprüche 1 bis 3, dadurch gekennzeichnet, dass sich in dem Tank (10) über dem äusseren Elektrodenraum (19) und dem Harzraum (18) ein gegenüber dem äusseren Elektrodenraum (19) verschlossener Rückspülraum (20) zum Rückspülen von im Harzraum (18) befindlichem Ionenaustauschharz anschliesst.

5. Vorrichtung nach Anspruch 4, dadurch gekennzeichnet, dass sich in dem Tank (10) unter dem äusseren Elektrodenraum (19) und dem Harzraum (18) durch einen im Bereich des Harzraumes (18) mit harzundurchlässigen Düsen (21) versehenen ringförmigen Zwischenboden (22) getrennt ein Wassersammelraum (23) anschliesst.

6. Vorrichtung nach Anspruch 5, dadurch gekennzeichnet, dass der Tank (10) zum Öffnen mit einem unteren Flanschpaar (24) in Höhe des unteren Endes des äusseren Elektrodenraumes (19) und mit einem oberen Flanschpaar (25) in Höhe des oberen Endes des äusseren Elektrodenraumes (19) versehen ist.

7. Vorrichtung nach einem der Ansprüche 1 bis 6, dadurch gekennzeichnet, dass zwei durch ein Überleitungsrohr (31) aneinandergereihte Tanks (10) an ihren Zentralelektroden (15) durch eine Stromschiene (32) verbunden sind und sich im äusseren Elektrodenraum (19) des als Kationenaustauscher (33) eingerichteten einen Tanks (10) die Anode (34) und im äusseren Elektrodenraum (19) des als Anionenaustauscher (35) eingerichteten anderen Tanks (10) die Kathode (36) befindet.

8. Vorrichtung nach Anspruch 7, dadurch gekennzeichnet, dass ein anteilmässig kleiner unterer Abschnitt des Harzraumes (18) des als Kationenaustauscher (33) eingerichteten einen Tanks (10) durch eine an ihrer Zwischenkammerdecke (41) mit harzundurchlässigen Düsen (21) versehene ringförmige Zwischenkammer (42) als Sicherheitsfilter abgeteilt ist und ein aus dem Tank (10) herausführender Zwischenkammerauslass (43) und ein dicht unter dem Zwischenkammerboden (44) zurückführender Sicherheitsfiltereinlass (45) durch den als Anionenaustauscher (35) eingerichteten anderen Tank (10) überbrückt sind.

## Claims

1. Apparatus for the desalination of water by electrodialysis, in which provided in a circular, cylindrical tank (10) is a central electrode (15) extending along the axis of the tank, a coaxial electrode chamber (16) embedding the central electrode in electrolytic solution, a coaxial resin chamber (18) containing ion exchange resin and a coaxial brine chamber (12) and the separation of adjacent chambers takes place respectively by a membrane which is permeable to cations or permeable to anions, characterized in that the brine chamber (12) is located between the electrode chamber (16) containing the central electrode (15) and the resin chamber (18) and inserted between the resin chamber (18) and the tank wall is a further electroce chamber (19) of hollow cylindrical construction and designed to receive another electrolytic solution.

2. Apparatus according to claim 1, characterized in that the brine chamber (12) projects beyond the two ends of the circular cylindrical tank (10) in a pipe (14) which can be removed from the tank (10) in the direction of the axis of the tank (13) and is perforated in the region receiving the membrane.

3. Apparatus according to claim 2, characterized in that the electrode chamber (16) containing the central electrode (15) projects beyond the two ends of the brine chamber (12) in an inner pipe (17) able to be removed from the tank (10) in the direction of the axis of the tank (13) and perforated in the area supporting the membrane.

4. Apparatus according to one of claims 1 to 3, characterized in that provided in the tank (10) above the outer electrode chamber (19) and the resin chamber (18) is a backwash chamber (20) closed off with respect to the outer electrode chamber (19) and serving for back-washing ion exchange resin located in the resin chamber (18).

5. Apparatus according to claim 4, characterized in that provided in the tank (10) below the outer electrode chamber (19) and the resin chamber (18) is a water collecting chamber (23) separated by an annular intermediate base (22) provided in the region of the resin chamber (18) with nozzles (21) which are impermeable to resin.

6. Apparatus according to claim 5, characterized in that for opening the tank (10) is provided with a lower pair of flanges (24) at the height of the lower end of the outer electrode chamber (19) and with an upper pair of flanges (25) at the height of the upper end of the outer electrode chamber (19).

7. Apparatus according to one of claims 1 to 6, characterized in that two tanks (10) arranged in a row one beside the other by a transfer pipe (31) are connected at their central electrodes (15) by a bus bar (32) and the anode (34) is located in the outer electrode chamber (19) of one tank (10) designed as the cation exchanger (33) and the cathode (36) is located in the outer electrode chamber (19) of the other tank (10) designed as the anion exchanger (35).

8. Apparatus according to claim 7, characterized in that a proportionately small lower section of the resin chamber (18) of one tank (10) designed as the cation exchanger (33) is divided off as a safety filter by an annular intermediate chamber (42) provided on its intermediate chamber cover (41) with nozzles (21) which are impermeable to resin and an intermediate chamber outlet (43) leading out of the tank (10) and a safety filter inlet (45) leading back in a tight manner below the intermediate chamber base (44) are bridged by the other tank (10) designed as an anion exchanger (35).

**Revendications**

1. Installation de dessalement de l'eau par électrodialyse, dans laquelle il est prévu dans une cuve (10) cylindrique, une électrode centrale (15) s'étendant suivant l'axe de la cuve, une chambre à électrode (16) coaxiale et faisant que l'électrode centrale est immergée dans la solution d'électrolyte, une chambre à résine (18) coaxiale et contenant une résine échangeuse d'ions et une chambre à saumure (12) coaxiale, la séparation des chambres adjacentes s'effectuant par des membranes perméables aux cations ou aux anions, caractérisée en ce que la chambre à saumure (12) est interposée entre la chambre à résine (18) et la chambre à électrode (16) contenant l'électrode centrale (15) et, entre la chambre à résine (18) et la paroi de la cuve, est insérée une autre chambre à électrode (19) en forme de cylindre creux et agencée pour recevoir une autre solution d'électrolyte.

2. Installation suivant la revendication 1, caractérisée en ce que la chambre à saumure (12) dépasse des deux extrémités de la cuve (10) cylindrique à section transversale circulaire, en un tuyau (14) pouvant être enlevé de la cuve (10), suivant la direction de l'axe (13) de la cuve, et perforé dans la région de réception de la membrane.

3. Installation suivant la revendication 2, caractérisée en ce que la chambre à électrode (16) contenant l'électrode centrale (15) dépasse des deux extrémités de la chambre à saumure (12), en un tuyau intérieur (17) pouvant être enlevé de la cuve (10), suivant la direction de l'axe (13) de la cuve, et perforé dans la région d'application de la membrane.

4. Installation suivant l'une des revendications 1 à 3, caractérisée en ce qu'il est prévu, dans la cuve (10), au-dessus de la chambre extérieure (19) à électrode et de la chambre à résine (18), une chambre de lavage en retour (20), qui est fermée par rapport à la chambre extérieure (19) à électrode et qui est destinée au lavage en retour de résine d'échange d'ions se trouvant dans la chambre à résine (18).

5. Installation suivant la revendication 10, caractérisée en ce qu'il est prévu, dans la cuve (10), en-dessous de la chambre extérieure (19) à électrode et de la chambre à résine (18), une chambre collectrice d'eau (23) séparée par un plateau intermédiaire (22) annulaire et muni, dans la région de la chambre à résine (18), de buses (21) imperméables à la résine.

6. Installation suivant la revendication 5, caractérisée en ce que la cuve (10) est munie, pour l'ouverture, d'un couple de brides (24) inférieures au niveau de l'extrémité inférieure de la chambre extérieure (19) à électrode, et d'un couple de brides (25) supérieur au niveau de l'extrémité supérieure de la chambre extérieure (19) à électrode.

7. Installation suivant l'une des revendications 1 à 6, caractérisée en ce que les électrodes centrales (15) de deux cuves (10) disposées l'une à côté de l'autre et communiquant par un tuyau de passage (31) sont reliées par un rail pour du courant électrique (32), et l'anode (34) se trouve dans la chambre extérieure (19) à électrode de l'une des cuves (10) agencée en échangeur de cations, et la cathode (36) se trouve dans la chambre extérieure (19) à électrode de l'autre cuve (10) agencée en échangeur d'anions (35).

8. Installation suivant la revendication 7, caractérisée en ce qu'une section inférieure relativement petite de la chambre à résine (18) de l'une des cuves (10) agencée en échangeur de cations (33) est séparée par une chambre intermédiaire (42) annulaire, servant de filtre de sécurité et munie sur son sommet (41), de buses (21) imperméables à la résine et en ce qu'une sortie (43), ménagée dans la chambre intermédiaire et permettant de sortir de la cuve (10), et une entrée (45) ménagée dans le filtre de sécurité et ramenant juste en-dessous du fond (44) de la chambre intermédiaire, sont reliées par l'autre cuve (10) agencée en échangeur d'anions (35).